# EUROPEAN PATENT APPLICATION

(11) **EP 4 830 947 A1**
(43) Date of publication of application: **28.10.2026**
(21) Application number: 25857919.2
(22) Date of filing: 19.09.2025
(51) Int. Cl.: B60D 1/24, B60D 1/26, B60D 1/04

(54) **TRAILER HITCH CONTROL METHOD AND SYSTEM, AND VEHICLE**

(30) Priority: 07.03.2025 CN 202510267005
(71) Applicant: Exquisite Automotive Systems Co., Ltd, Baoding, Hebei 071000 (CN)
(72) Inventor: TANG, Yingqing, Baoding, Hebei 071000 (CN); ZHENG, Xinxi, Baoding, Hebei 071000 (CN)
(74) Representative: Murgitroyd & Company
(86) International application number: PCT/CN2025/122653
(87) International publication number: WO 2026/184066

(57) **Abstract**

The present disclosure relates to the field of vehicle technology, and provides a tow hook controlling method, a system, and a vehicle. The tow hook controlling method includes: sending an in-position detection signal upon receiving a tow hook control signal; outputting a motor control signal and a target position detection signal in response to an in-position feedback signal and the in-position detection signal meeting a first preset condition, where the in-position feedback signal is a signal generated by a microprocessor unit based on the in-position detection signal, and the motor control signal is configured to command a drive motor assembly to drive a tow hook to rotate after unlocking; sending a stop control signal in response to first rotation information meeting a second preset condition, where the first rotation information is rotation information of the drive motor assembly, and the stop control signal is configured to command the drive motor assembly to stop rotating; and determining that the tow hook has reached a target position in response to a position feedback signal and the target position detection signal meeting a third preset condition, where when the tow hook has reached the target position and is locked, the position feedback signal and the target position detection signal meet the third preset condition, thereby achieving automatic control of the tow hook.

## Description

### TECHNICAL FIELD

The present disclosure relates to the field of vehicle technologies, and in particular, to a tow hook controlling method, a system, and a vehicle.

### BACKGROUND

With development of vehicle industry, user requirements for vehicle performance are becoming increasingly high, with an increasing demand for intelligent control of a tow hook. Currently, the tow hook of the vehicle still needs to be manually released or retracted, which involves cumbersome operations and high safety risks.

### SUMMARY

The embodiments of the present disclosure provide a tow hook controlling method, a system, and a vehicle, to achieve automatic releasing or retracting of the tow hook.

In a first aspect, the embodiments of the present disclosure provides a tow hook controlling method, including:
sending an in-position detection signal upon receiving a tow hook control signal;
outputting a motor control signal and a target position detection signal in response to an in-position feedback signal and the in-position detection signal meeting a first preset condition, where the in-position feedback signal is a signal generated by a microprocessor unit based on the in-position detection signal, and the motor control signal is configured to command a drive motor assembly to drive a tow hook to rotate after unlocking;
sending a stop control signal in response to first rotation information meeting a second preset condition, where the first rotation information is rotation information of the drive motor assembly, and the stop control signal is configured to command the drive motor assembly to stop rotating; and
determining that the tow hook has reached a target position in response to a position feedback signal and the target position detection signal meeting a third preset condition, where the position feedback signal is a signal generated by the microprocessor unit based on the target position detection signal, and when the tow hook has reached the target position and is locked, the position feedback signal and the target position detection signal meet the third preset condition.

In a second aspect, the embodiments of the present disclosure provides a tow hook control system, including a control unit, a drive motor assembly, a tow hook locking mechanism assembly, an acquisition unit, and a microprocessor unit; where
the control unit is configured to send an in-position detection signal upon receiving a tow hook control signal;
the microprocessor unit is configured to output an in-position feedback signal based on the in-position detection signal;
the control unit is further configured to output a motor control signal and a target position detection signal in response to the in-position feedback signal and the in-position detection signal meeting a first preset condition;
the drive motor assembly is configured to rotate based on the motor control signal, drive the tow hook locking mechanism assembly to rotate, with an unlocking disc in the tow hook locking mechanism assembly moving a preset distance in a first direction to unlock the tow hook, and drive the tow hook to rotate;
the acquisition unit is configured to acquire rotation information of the drive motor assembly and output first rotation information;
the control unit is further configured to send a stop control signal in response to the first rotation information meeting a second preset condition;
the drive motor assembly is configured to stop rotating based on the stop control signal, with the unlocking disc moving the preset distance in a second direction to lock the tow hook, where the first direction and the second direction are opposite;
the microprocessor unit is configured to output a position feedback signal based on the target position detection signal; and
the control unit is further configured to determine that the tow hook has reached a target position in response to the position feedback signal and the target position detection signal meeting a third preset condition; where the target position detection signal and the position feedback signal output by the microprocessor unit meet the third preset condition in response to the tow hook being locked.

In a third aspect, the embodiments of the present disclosure provides a vehicle, including the tow hook control system described in the second aspect.

Compared with the prior art, the embodiments of the present disclosure have the following beneficial effects.

Upon receiving the tow hook control signal, the in-position detection signal is sent. The microprocessor unit generates the in-position feedback signal based on the in-position detection signal. When the in-position feedback signal and the in-position detection signal meet the first preset condition, it indicates that the tow hook is in the designated position, and then, the motor control signal and the target position detection signal are output. The drive motor assembly drives the tow hook to rotate according to the motor control signal after unlocking. During the process of the drive motor assembly driving the tow hook to rotate, the first rotation information of the drive motor assembly is acquired. When the first rotation information meets the second preset condition, it indicates that the drive motor assembly has rotated to the correct position, and the tow hook has reached the target position. At this point, a stop control command is sent. The drive motor assembly stops rotating according to the stop control command. At this point, the unlocking disc moves a preset distance in the opposite direction to the first direction to lock the tow hook. The microprocessor unit will output the position feedback signal based on the target position detection signal, and determine whether the position feedback signal and the target position detection signal meet the third preset condition. When it is identified that the position feedback signal and the target position detection signal meet the third preset condition, it is determined that the tow hook have reached the target position and has been locked. Thus, according to the tow hook controlling method disclosed by the present disclosure, automatic control of the tow hook can be achieved without need for manual user operation, thereby reducing difficulty of operating the tow hook and improving usage safety for users.

The beneficial effects of the second aspect to the third aspect can be referred to relevant description in the first aspect, and will not be repeated here.

### BRIEF DESCRIPTION OF THE DRAWINGS

To more clearly illustrate the technical solutions of the embodiments of the present disclosure, a brief introduction will be made to accompanying drawings required for the embodiments or related technical descriptions below. It is apparent that the accompanying drawings described below are merely some embodiments of the disclosure, and for those skilled in the art, other accompanying drawings can be obtained based on these accompanying drawings without creative effort.
FIG. 1 is a schematic diagram of a tow hook control system according to an embodiment of the disclosure.
FIG. 2 is a schematic diagram of a tow hook control system according to another embodiment of the disclosure.
FIG. 3 is an assembly schematic diagram of a tow hook control system according to an embodiment of the present disclosure.
FIG. 4 is a flowchart of a tow hook controlling method according to an embodiment of the present disclosure.

Reference numerals: 100, control unit; 200, drive motor assembly; 300, tow hook locking mechanism assembly; 301, unlocking disc; 302, rotating shaft; 400, acquisition unit; 500, microprocessor unit; 501, first sensor; 502, contact sensor; 600, wiring harness interface; 700, tow hook.

### DETAILED DESCRIPTION OF THE EMBODIMENTS

In the following description, for the purpose of illustration and not limitation, specific details such as particular system structures, techniques, etc., are disclosed to facilitate a thorough understanding of embodiments of the present disclosure. However, those skilled in the art will appreciate that the present disclosure can also be implemented in other embodiments without these specific details. In other instances, detailed descriptions of well-known systems, devices, circuits, and methods are omitted to avoid unnecessary detail obscuring the description of the present disclosure.

It should be understood that when the term "comprise" is used in the specification and appended claims of the present disclosure, it indicates presence of features, assemblies, steps, operations, elements, and/or components described, but does not exclude presence or addition of one or more other features, assemblies, steps, operations, elements, components, and/or their combinations.

It should also be understood that the term "and/or" as used in the specification and appended claims of the present disclosure refers to any combination of one or more of the items listed and all possible combinations, and includes these combinations.

As used in the specification and appended claims of the present disclosure, the term "if" can be interpreted as "when...", "at once", "in response to determining [a described condition or event]" or "in response to detecting". Similarly, the phrase "if determining" or "if detecting" may be interpreted in context as meaning "once determining", "in response to determining", "once detecting [a described condition or event]" or "in response to detecting [a described condition or event]".

Furthermore, in the description of the present disclosure and the appended claims, the terms "first", "second", "third", and etc. are used solely for distinction and are not intended to indicate or imply relative importance.

In the present disclosure, references to "an embodiment" or "some embodiments", etc. mean that disclosed specific features, structures, or characteristics are included in one or more embodiments of the present disclosure. Thus, the phrases "in one embodiment", "in some embodiments", "in other embodiments", "in further embodiments", and etc. appearing in different parts of this specification do not necessarily refer to the same embodiment, but rather mean "one or more but not all embodiments", unless otherwise specifically emphasized. The terms "including", "comprising", "having", and their variations mean "including but not limited to", unless otherwise specifically emphasized."

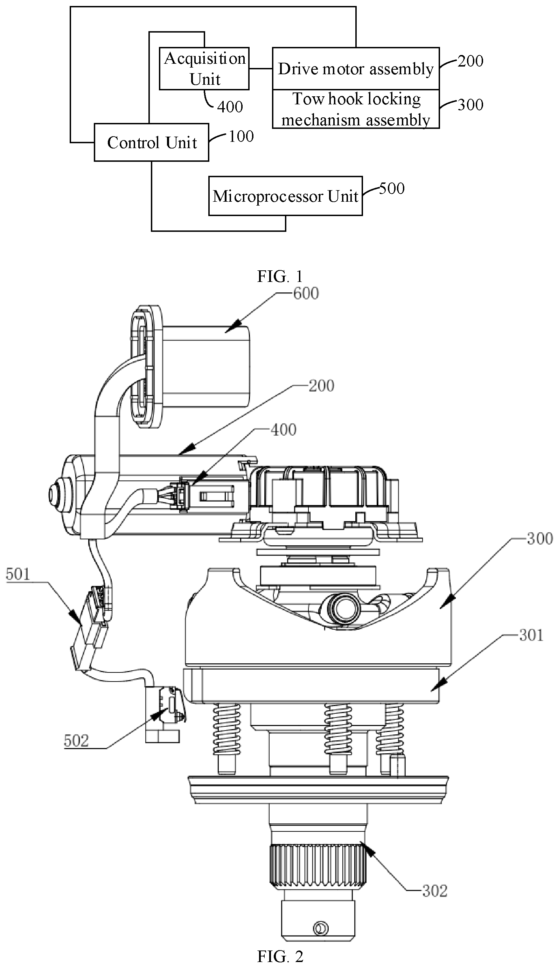

The embodiments of the present disclosure provide a tow hook control system. As shown in FIGS. 1 to 3, the tow hook control system includes a control unit 100, a drive motor assembly 200, a tow hook locking mechanism assembly 300, an acquisition unit 400, and a microprocessor unit 500.

Specifically, a tow hook 700 of a vehicle has two states: a released position and a retracted position. When the tow hook 700 is required, the tow hook 700 must be controlled to be in the released position; and when the tow hook 700 is not required, the tow hook 700 must be controlled to be in the retracted position. When a user needs to control the tow hook 700, the user can send a tow hook control signal through a smart key, a vehicle display, or a voice system on the vehicle. The control unit 100 is configured to send an in-position detection signal to the microprocessor unit 500 upon receiving the tow hook control signal.

The microprocessor unit 500 is configured to output an in-position feedback signal based on the in-position detection signal. The in-position feedback signal output by the microprocessor unit 500 is different depending on a position of an unlocking disc 301 in the tow hook locking assembly 300. When the unlocking disc 301 is in contact with the microprocessor unit 500, the in-position feedback signal output by the microprocessor unit 500 does not meet a first preset condition; and when the unlocking disc 301 is not in contact with the microprocessor unit 500, the in-position feedback signal output by the microprocessor unit 500 meets the first preset condition.

Upon receiving the in-position feedback signal output by the microprocessor unit 500, the control unit 100 compares the in-position feedback signal and the in-position detection signal to determine whether the in-position feedback signal and the in-position detection signal meet the first preset condition. If the in-position feedback signal and the in-position detection signal meet the first preset condition, it indicates that the unlocking disc 301 is not in contact with the microprocessor unit 500, and the tow hook 700 is in a designated position. At this point, the control unit 100 outputs a motor control signal and a target position detection signal.

The drive motor assembly 200 is configured to rotate according to the motor control signal and drive the tow hook locking assembly 300 to rotate with the unlocking disc 301 in the tow hook locking assembly 300 moving in a first direction to unlock the tow hook. When the unlocking disc 301 moves a preset distance in the first direction, the tow hook 700 is unlocked, and the drive motor assembly 200 can rotate the tow hook 700 through a rotation shaft 302.

During the rotation of the drive motor assembly 200, the acquisition unit 400 is configured to acquire rotation information of the drive motor assembly 200 and output first rotation information.

The control unit 100 is further configured to receive the first rotation information. When the first rotation information meets a second preset condition, it indicates that the tow hook 700 has reached a target position. At this point, the control unit 100 sends a stop control signal.

Upon receiving the stop control signal, the drive motor assembly 200 stops rotating. At this point, the unlocking disc 301 moves the preset distance in a second direction opposite to the first direction to lock the tow hook 700.

During the rotation of the drive motor assembly 200, the microprocessor unit 500 outputs a position feedback signal based on the target position detection signal in response to the target position detection signal. When the tow hook 700 is in an unlocked state, i.e., when the unlocking disc 301 moves the preset distance in the first direction, the unlocking disc 301 is in contact with the microprocessor unit 500, and at this point, the position feedback signal output by the microprocessor unit 500 and the target position detection signal do not meet a third preset condition. When the unlocking disc 301 moves the preset distance in the second direction, the unlocking disc 301 releases the microprocessor unit 500, that is, the unlocking disc 301 is no longer in contact with the microprocessor unit 500, and at this point, the position feedback signal output by the microprocessor unit 500 and the target position detection signal meet the third preset condition.

When the control unit 100 identifies that the position feedback signal and the target position detection signal meet the third preset condition, the tow hook 700 has reached the target position and the tow hook 700 has been locked.

Thus, the tow hook control system achieves automatic control of the tow hook 700 through the above workflow without need for manual user operation, thereby reducing operating difficulty of the tow hook 700 and improving usage safety for users.

In some embodiments, after the control unit 100 sends the stop control signal to the drive motor assembly 200, the drive motor assembly 200 is no longer driven by voltage. However, due to inertia, the drive motor assembly 200 is still rotating. At this point, the control unit 100 is configured to acquire second rotation information (for example, the second rotation information is rotation information of the drive motor assembly 200 after the control unit 100 sends the stop control signal) through the acquisition unit 400, and determine a drive parameter based on the second rotation information. The drive parameter is configured to indicate the parameters for driving the drive motor assembly 200 during the next control of the tow hook 700. That is, during the next control of the tow hook 700, the control unit 100 drives the drive motor assembly 200 according to the drive parameter, thereby compensating for an error caused by the inertia rotation of the drive motor assembly 200 during the previous control of the tow hook 700, thus improving control accuracy of the tow hook 700.

In some embodiments, as shown in FIG. 2, the microprocessor unit 500 includes a contact sensor 502 and a first sensor 501. The first sensor 501 is electrically connected to both the contact sensor 502 and the control unit 100. The contact sensor 502 is positioned near the tow hook locking mechanism assembly 300.

Specifically, when the unlocking disc 301 moves a preset distance in the first direction, the tow hook 700 is unlocked, and the unlocking disc 301 presses against the contact sensor 502. At this point, the drive motor assembly 200 can drive the tow hook 700 to rotate. When the unlocking disc 301 moves in a second direction opposite to the first direction by the preset distance, the tow hook 700 is locked, fixing the tow hook 700 at its current position. Meanwhile, the unlocking disc 301 leaves the contact sensor 502, and the unlocking disc 301 no longer presses against the contact sensor 502. When the unlocking disc 301 presses against the contact sensor 502, the in-position feedback signal output by the first sensor 501 and the in-position detection signal do not meet the first preset condition, or, the position feedback signal output by the first sensor 501 and the target position detection signal do not meet the third preset condition. When the unlocking disc 301 does not press against the contact sensor 502, the in-position feedback signal output by the first sensor 501 and the in-position detection signal meet the first preset condition, or, the position feedback signal output by the first sensor 501 and the target position detection signal meet the third preset condition. Therefore, after the control unit 100 outputs the in-position detection signal or the target position detection signal to the microprocessor unit 500, the microprocessor unit 500 receives the in-position feedback signal or the position feedback signal output by the first sensor 501. By comparing the in-position detection signal with the in-position feedback signal, or by comparing the target position detection signal with the position feedback signal, the status of the tow hook 700 (unlocked state or locked state) can be determined. Before controlling the tow hook 700, if it is determined that the in-position detection signal and the in-position feedback signal meet the first preset condition, it is determined that the current tow hook 700 is located at the designated position, and at this point, the drive motor assembly 200 can be controlled to rotate. During the rotation of the tow hook 700 driven by the drive motor assembly 200, if it is determined that the target position detection signal and the position feedback signal meet the third preset condition, it is determined that the tow hook 700 has been rotated to the target position, and at this point, the control unit 100 controls the drive motor assembly 200 to stop rotating.

In some embodiments, the contact sensor 502 includes a microswitch. When the unlocking disc 301 presses against the contact sensor 502, the microswitch is in a normally open state, and when the unlocking disc 301 does not press against the contact sensor 502, the microswitch is in a normally closed state.

Specifically, the microswitch has a normally open terminal (NO), a common terminal (COM), and a normally closed terminal (NC). The normally open terminal (NO), the common terminal (COM), and the normally closed terminal (NC) of the microswitch are connected to three pins of the first sensor 501 in one-to-one correspondence to avoid damage to the microswitch due to overcurrent caused by incorrect or reverse connection.

When the unlocking disc 301 does not press against a contact plate of the microswitch, the microswitch is in the normally closed state, and at this point, the microswitch is in a stable state. The first sensor 501 outputs the in-position feedback signal according to the in-position detection signal sent by the control unit 100. At this point, the in-position feedback signal and the in-position detection signal meet the first preset condition. Alternatively, the first sensor 501 outputs the position feedback signal according to the target position detection signal sent by the control unit 100. At this point, the position feedback signal and the target position detection signal meet the third preset condition.

When the unlocking disc 301 moves from an initial position along the first direction by the preset distance, the unlocking disc 301 presses against the contact plate of the microswitch, and the microswitch is in a fluctuating state. The first sensor 501 outputs the in-position feedback signal according to the in-position detection signal sent by the control unit 100. At this point, the in-position feedback signal and the in-position detection signal do not meet the first preset condition. Alternatively, the first sensor 501 outputs the position feedback signal according to the target position detection signal sent by the control unit 100. At this point, the position feedback signal and the target position detection signal do not meet the third preset condition.

Thus, by sending a detection signal (the in-position detection signal or the target position detection signal) from the control unit 100 to the first sensor 501, and receiving a feedback signal (the in-position feedback signal or the position feedback signal) from the first sensor 501, the position of the current unlocking disc 301 can be determined by comparing the sent signal with the received signal. Since the position of the unlocking disc 301 corresponds to the position of the tow hook 700, the control unit 100 can determine the position of the tow hook 700 by comparing the sent signal with the received signal.

In some embodiments, a transmission mechanism of the drive motor assembly 200 adopts a worm gear and single-stage gear set instead of a conventional planetary gear set. This design is simpler in structure and is integrated inside the drive motor, resulting in high integration, smaller size, and lower cost.

In some embodiments, the acquisition unit 400 includes a Hall sensor, and the motor shaft of the drive motor assembly 200 is equipped with a multi-stage permanent magnet to form a potentiometer with a brush on a rotor (variable resistor). When the potentiometer detects the rotation of the drive motor assembly 200, the Hall sensor outputs a regular position pulse width signal (first rotation information) and sends it to the control unit 100. The control unit 100 can determine rotation information (rotational time, rotational angle, etc.) of the drive motor assembly 200 through the first rotation information output by the Hall sensor, thereby monitoring the rotation of the drive motor assembly 200.

In some embodiments, wiring harnesses of the acquisition unit 400 (the Hall sensor) and the microprocessor unit 500 (the first sensor 501) are connected to the control unit 100 through a wiring harness interface 600, allowing for a more rational layout of the wiring.

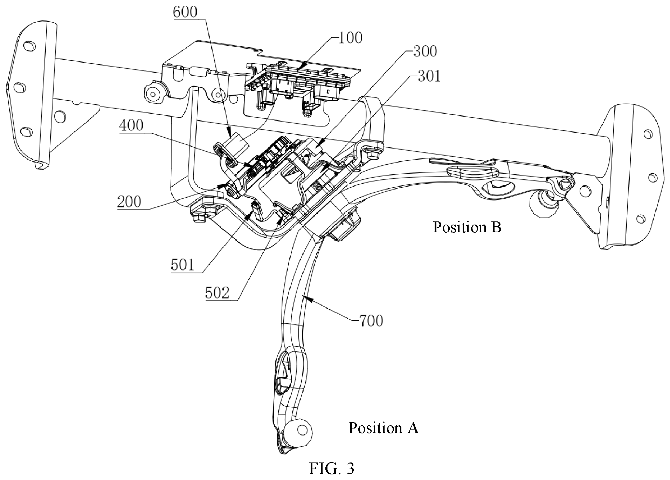

To clearly illustrate the working principle of the tow hook control system, a working process of the tow hook control system is described below with reference to FIG. 3.

As shown in FIG. 3, the tow hook 700 of the vehicle has two states: a released position (position A in FIG. 3) and a retracted position (position B in FIG. 3).

In a first scenario: when the tow hook 700 is required, the tow hook 700 is controlled to move from the retracted position to the released position.

Upon receiving a tow-hook releasing control command, the control unit 100 sends an in-position detection signal to a microprocessor unit 500 (first sensor 501 in FIG. 3).

The microprocessor unit 500 outputs an in-position feedback signal based on the in-position detection signal, and the output of the in-position feedback signal from the microprocessor unit 500 varies depending on the position of an unlocking disc 301 in a tow hook locking assembly 300. When the unlocking disc 301 is in contact with the microprocessor unit 500, the in-position feedback signal output by the microprocessor unit 500 and the in-position detection signal do not meet a first preset condition. When the unlocking disc 301 is not in contact with the microprocessor unit 500, the in-position feedback signal output by the microprocessor unit 500 and the in-position detection signal meet the first preset condition.

Upon receiving the in-position feedback signal output by the microprocessor unit 500, the control unit 100 compares the in-position feedback signal with the in-position detection signal to determine whether the in-position feedback signal and the in-position detection signal meet the first preset condition. If the in-position feedback signal and the in-position detection signal meet the first preset condition, it indicates that the unlocking disc 301 is not in contact with the microprocessor unit 500 and the tow hook 700 is in the retracted position (position B in FIG. 3). Then, the control unit 100 outputs a motor control signal and a target position detection signal.

The drive motor assembly 200 is configured to rotate according to the motor control signal and drive the tow hook locking assembly 300 to rotate. During this process, the unlocking disc 301 in the tow hook locking assembly 300 moves in the first direction, and the trailer disc starts to be unlocked. When the unlocking disc 301 moves a preset distance in the first direction, the tow hook 700 has been unlocked, and the drive motor assembly 200 drives the tow hook 700 to rotate.

During the rotation of the drive motor assembly 200, the acquisition unit 400 is configured to acquire rotation information of the drive motor assembly 200 and output first rotation information.

The control unit 100 receives the first rotation information. When the first rotation information meets a second preset condition, it indicates that the tow hook 700 has reached a target position. At this point, the control unit 100 sends a stop control signal.

Upon receiving the stop control signal, the drive motor assembly 200 stops rotating. At this point, the unlocking disc 301 moves the preset distance in a second direction opposite to the first direction to lock the tow hook 700.

During the rotation of the drive motor assembly 200, the microprocessor unit 500 responds to the target position detection signal and outputs a position feedback signal based on the target position detection signal. When the tow hook 700 is in the unlocked state, i.e., when the unlocking disc 301 moves the preset distance in the first direction, the unlocking disc 301 is in contact with the microprocessor unit 500. At this point, the position feedback signal output by the microprocessor unit 500 and the target position detection signal do not meet a third preset condition. When the unlocking disc 301 moves the preset distance in the second direction, the unlocking disc 301 releases the microprocessor unit 500, i.e., the unlocking disc 301 is no longer in contact with the microprocessor unit 500, and at this point, the position feedback signal output by the microprocessor unit 500 and the target position detection signal meet the third preset condition.

When the control unit 100 identifies that the position feedback signal and the target position detection signal meet the third preset condition, it is determined that the tow hook 700 has reached the target position (position A in FIG. 3) and the tow hook 700 has been locked.

Thus, the tow hook control system achieves automatic release of the tow hook 700 through the above workflow without need for manual user operation, reducing operational difficulty of the tow hook 700 and improving usage safety for users.

When the control unit 100 sends the stop control signal to the drive motor assembly 200, the drive motor assembly 200 is no longer driven by voltage. However, due to inertia, the drive motor assembly 200 is still rotating. At this point, the control unit 100 acquires second rotation information (for example, the second rotation information is rotation information of the drive motor assembly 200 after the control unit 100 sends the stop control signal) from the acquisition unit 400, and determines a drive parameter based on the second rotation information. The drive parameter is configured to indicate the parameter for driving the drive motor assembly 200 during the next control of the tow hook 700 (control of the tow hook 700 to retract). That is, during the next control of the tow hook 700, the control unit 100 drives the drive motor assembly 200 according to the drive parameter, thereby compensating for an error caused by the inertia rotation of the drive motor assembly 200 during the previous control of the tow hook 700, thus improving control accuracy of the tow hook 700.

Second scenario: after usage of the tow hook 700, the tow hook 700 needs to be controlled to move from the released position to the retracted position.

After the control unit 100 receives a tow hook retracting control command, it sends the in-position detection signal to the microprocessor unit 500 (that is, the first sensor 501 in FIG. 3).

The microprocessor unit 500 outputs the in-position feedback signal based on the in-position detection signal, and the output of the in-position feedback signal from the microprocessor unit 500 varies depending on the position of the unlocking disc 301 in the tow hook locking assembly 300. When the unlocking disc 301 is in contact with the microprocessor unit 500, the in-position feedback signal output by the microprocessor unit 500 and the in-position detection signal do not meet the first preset condition. When the unlocking disc 301 is not in contact with the microprocessor unit 500, the in-position feedback signal output by the microprocessor unit 500 and the in-position detection signal meet the first preset condition.

Upon receiving the in-position feedback signal output by the microprocessor unit 500, the control unit 100 compares the in-position feedback signal with the in-position detection signal to determine whether the in-position feedback signal and the in-position detection signal meet the first preset condition. If the in-position feedback signal and the in-position detection signal meet the first preset condition, it indicates that the unlocking disc 301 is not in contact with the microprocessor unit 500, and the tow hook 700 is in the released position (position A in FIG. 3). In this case, the control unit 100 outputs the motor control signal and the target position detection signal.

The drive motor assembly 200 is configured to rotate according to the motor control signal and drive the tow hook locking assembly 300 to rotate. During this process, the unlocking disc 301 in the tow hook locking assembly 300 moves in the first direction, and the trailer disc starts to be unlocked. When the unlocking disc 301 moves the preset distance in the first direction, the tow hook 700 id unlocked, and the drive motor assembly 200 drives the tow hook 700 to rotate.

During the rotation of the drive motor assembly 200, the acquisition unit 400 is configured to acquire the rotation information of the drive motor assembly 200 and output the first rotation information.

The first rotation information is received by the control unit 100. When the first rotation information meets the second preset condition, it indicates that the tow hook 700 has reached the target position. At this point, the control unit 100 sends a stop control signal.

Upon receiving the stop control signal, the drive motor assembly 200 stops rotating. At this point, the unlocking disc 301 moves the preset distance in the second direction opposite to the first direction to lock the tow hook 700.

During the rotation of the drive motor assembly 200, the microprocessor unit 500 responds to the target position detection signal and outputs the position feedback signal based on the target position detection signal. When the tow hook 700 is in the unlocked state, i.e., when the unlocking disc 301 moves the preset distance in the first direction, the unlocking disc 301 is in contact with the microprocessor unit 500, and at this point, the position feedback signal output by the microprocessor unit 500 and the target position detection signal do not meet the third preset condition. When the unlocking disc 301 moves the preset distance in the second direction, the unlocking disc 301 releases the microprocessor unit 500, i.e., the unlocking disc 301 is no longer in contact with the microprocessor unit 500, and at this point, the position feedback signal output by the microprocessor unit 500 and the target position detection signal meet the third preset condition.

When the control unit 100 identifies that the position feedback signal and the target position detection signal meet the third preset condition, it determines that the tow hook 700 has reached the target position (position B in FIG. 3) and the tow hook 700 has been locked.

Thus, the tow hook control system achieves automatic retraction of the tow hook 700 through the above workflow without need for manual user operation, thereby reducing operational difficulty of the tow hook 700 and improving usage safety for users.

When the control unit 100 sends the stop control signal to the drive motor assembly 200, the drive motor assembly 200 is no longer driven by voltage. However, due to inertia, the drive motor assembly 200 is still rotating. At this point, the control unit 100 acquires second rotation information (for example, the second rotation information is rotation information of the drive motor assembly 200 after the control unit 100 sends the stop control signal) from the acquisition unit 400, and determines a drive parameter based on the second rotation information. The drive parameter is configured to indicate the parameter for driving the drive motor assembly 200 during the next control of the tow hook 700 (control of the tow hook 700 to release). That is, during the next control of the tow hook 700, the control unit 100 drives the drive motor assembly 200 according to the drive parameter, thereby compensating for an error caused by the inertia rotation of the drive motor assembly 200 during the previous control of the tow hook 700, thus improving control accuracy of the tow hook 700.

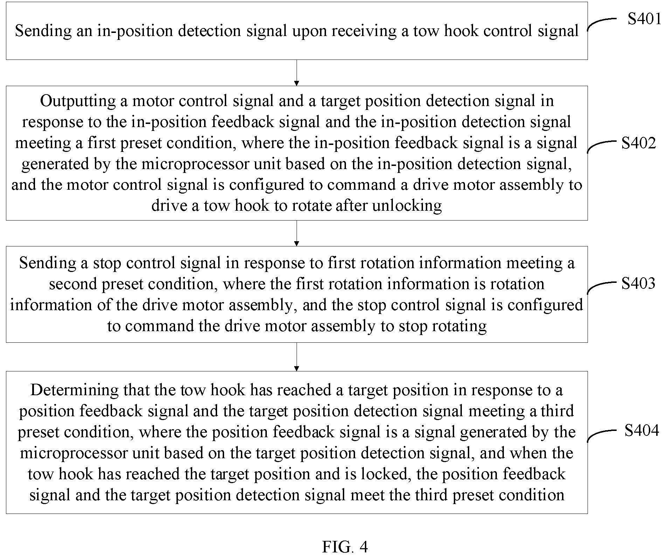

The present disclosure also provides a tow hook controlling method, as shown in FIG. 4, the tow hook controlling method includes steps S401 to S404.

Step S401: sending an in-position detection signal upon receiving a tow hook control signal.

Specifically, when the user needs to control the tow hook, the user can send the tow hook control signal through a smart key, a vehicle display, or a voice system on the vehicle. Upon receiving the tow hook control signal, the in-position detection signal is sent to a microprocessor unit.

Step S402: outputting a motor control signal and a target position detection signal in response to the in-position feedback signal and the in-position detection signal meeting a first preset condition, where the in-position feedback signal is a signal generated by the microprocessor unit based on the in-position detection signal, and the motor control signal is configured to command a drive motor assembly to drive a tow hook to rotate after unlocking.

Specifically, the microprocessor unit is configured to output the in-position feedback signal based on the in-position detection signal, and the in-position feedback signal output by the microprocessor unit varies depending on a position of an unlocking disc in a tow hook locking mechanism assembly. When the unlocking disc is in contact with the microprocessor unit, the in-position feedback signal output by the microprocessor unit and the in-position detection signal do not meet the first preset condition; and when the unlocking disc is not in contact with the microprocessor unit, the in-position feedback signal output by the microprocessor unit and the in-position detection signal meet the first preset condition.

Upon receiving the in-position feedback signal output by the microprocessor unit, the in-position feedback signal and the in-position detection signal are compared to determine whether the in-position feedback signal and the in-position detection signal meet the first preset condition. If the in-position feedback signal and the in-position detection signal meet the first preset condition, it indicates that the unlocking disc is not in contact with the microprocessor unit, and the tow hook is in a designated position. In this case, the motor control signal and the target position detection signal are output.

For example, both the in-position detection signal and the in-position feedback signal are pulse modulated signals. When the in-position detection signal and the in-position feedback signal coincide, it is determined that the in-position detection signal and the in-position feedback signal meet the first preset condition.

Step S403: sending a stop control signal in response to first rotation information meeting a second preset condition, where the first rotation information is rotation information of the drive motor assembly, and the stop control signal is configured to command the drive motor assembly to stop rotating.

Specifically, the drive motor assembly rotates according to the motor control signal and drives the tow hook locking mechanism assembly to rotate. In this process, the unlocking disc in the tow hook locking mechanism assembly moves in the first direction, and the trailer disc starts to be unlocked. When the unlocking disc moves a preset distance in the first direction, the tow hook is unlocked, and the drive motor assembly drives the tow hook to rotate. During the rotation of the drive motor assembly, the acquisition unit is configured to acquire rotation information of the drive motor assembly and output first rotation information. Upon receiving the first rotation information, when the first rotation information meets the second preset condition, it indicates that the tow hook has reached a target position. At this point, the stop control signal is sent. Upon receiving the stop control signal, the drive motor assembly stops rotating. At this point, the unlocking disc moves the preset distance in an opposite direction to the first direction to lock the tow hook.

For example, the motor control signal includes target rotation duration. The first rotation information includes actual rotation duration of the drive motor assembly. When the actual rotation duration reaches the target rotation duration, it is determined that the first rotation information meets the second preset condition.

Alternatively, the motor control signal includes a target rotation angle. The first rotation information includes an actual rotation angle of the drive motor assembly. When the actual rotation angle equals the target rotation angle, it is determined that the first rotation information meets the second preset condition.

Step S404: determining that the tow hook has reached a target position in response to a position feedback signal and the target position detection signal meeting a third preset condition, where the position feedback signal is a signal generated by the microprocessor unit based on the target position detection signal, and when the tow hook has reached the target position and is locked, the position feedback signal and the target position detection signal meet the third preset condition.

Specifically, during the rotation of the drive motor assembly, the microprocessor unit responds to the target position detection signal and outputs the position feedback signal based on the target position detection signal. When the tow hook is in an unlocked state, i.e., when the unlocking disc moves the preset distance in the first direction, the unlocking disc is in contact with the microprocessor unit. At this point, the position feedback signal output by the microprocessor unit and target position detection signal do not meet the third preset condition. When the unlocking disc moves the preset distance in the second direction, he unlocking disc releases the microprocessor unit, i.e., the unlocking disc is no longer in contact with the microprocessor unit. At this point, the position feedback signal output by the microprocessor unit and target position detection signal meet the third preset condition.

When the position feedback signal and the target position detection signal meet the third preset condition, it is determined that the tow hook has reached the target position and the tow hook has been locked.

Thus, the tow hook control system achieves automatic control of the tow hook through the above workflow without need for manual user operation, thereby reducing operational difficulty of the tow hook and improving usage safety for users.

For example, both the target position detection signal and the position feedback signal are pulse modulated signals. When the target position detection signal and the position feedback signal coincide, it is determined that the position feedback signal and the target position detection signal meet the third preset condition.

In some embodiments, after the determining that the tow hook has reached a target position, the tow hook controlling method further includes: acquiring second rotation information, where the second rotation information is rotation information of the drive motor assembly after the stop control signal is sent; and determining a drive parameter based on the second rotation information, where the drive parameter is a parameter for driving the drive motor assembly during next control of the tow hook.

Specifically, after the stop control signal is sent to the drive motor assembly, the drive motor assembly is no longer driven by voltage. However, due to inertia, the drive motor assembly 200 is still rotating. At this point, second rotation information is acquired is acquired by an acquisition unit (for example, the second rotation information is rotation information of the drive motor assembly after the stop control signal is sent), and a drive parameter is determined based on the second rotation information. The drive parameter is configured to indicate the parameter for driving the drive motor assembly during the next control of the tow hook. That is, during the next control of the tow hook, the drive motor assembly is driven according to the drive parameter, thereby compensating for an error caused by the inertia rotation of the drive motor assembly during the previous control of the tow hook, thus improving control accuracy of the tow hook.

In some embodiments, the tow hook controlling method further includes: periodically sending the target position detection signal and periodically acquiring the position feedback signal; and sending an alarm message in response to a count of instances where the position feedback signal and the target position detection signal do not meet the third preset condition reaches a preset number.

Specifically, during control of the tow hook, the tow hook may be stuck and unable to move to the target position. At this point, the target position detection signal is periodically sent and the position feedback signal is periodically acquired. When the count of instances where the position feedback signal and the target position detection signal do not meet the third preset condition reaches the preset number, it indicates that the tow hook cannot move to the target position. At this point, an alarm message is sent to notify the user that the tow hook cannot move to the target position. The alarm message is used to allow for timely processing upon receiving the alarm message, so that the tow hook can return to normal and move smoothly to the target position, ensuring the normal use of the tow hook.

For example, the alarm message can be sent by an audio device of the vehicle to provide a voice alarm to prompt the user; it can also be sent by a display screen of the vehicle to display the alarm message; it can also be sent by an indicator light of the vehicle. In addition, he alarm message can also be sent by other methods to alarm and notify the user, without limiting the specific method of the alarm.

The present disclosure also provides a vehicle including the aforementioned tow hook control system, which can achieve automatic control of the tow hook without need for manual user operation, thereby reducing operating difficulty of the tow hook and improving usage safety for users.

The above examples are merely provided for illustrating the technical solution of the present disclosure and are not intended to limit the same. Although the present disclosure has been described in detail with reference to the foregoing examples, a person skilled in the art should understand that they can still modify the technical solutions recorded in the foregoing examples, or replace some of the technical features with equivalent ones; and such modifications or replacements, made without departing from the spirit and scope of the technical solutions of the embodiments of the present disclosure, are intended to be included within the protection scope of the present disclosure.

## Claims

1. A tow hook controlling method, comprising:
sending an in-position detection signal upon receiving a tow hook control signal;
outputting a motor control signal and a target position detection signal in response to an in-position feedback signal and the in-position detection signal meeting a first preset condition, wherein the in-position feedback signal is a signal generated by a microprocessor unit based on the in-position detection signal, and the motor control signal is configured to command a drive motor assembly to drive a tow hook to rotate after unlocking;
sending a stop control signal in response to first rotation information meeting a second preset condition, wherein the first rotation information is rotation information of the drive motor assembly, and the stop control signal is configured to command the drive motor assembly to stop rotating; and
determining that the tow hook has reached a target position in response to a position feedback signal and the target position detection signal meeting a third preset condition, wherein the position feedback signal is a signal generated by the microprocessor unit based on the target position detection signal, and when the tow hook has reached the target position and is locked, the position feedback signal and the target position detection signal meet the third preset condition.

2. The tow hook controlling method according to claim 1, wherein the in-position detection signal and the in-position feedback signal are both pulse modulated signals, and the tow hook controlling method further comprises:
determining that the in-position detection signal and the in-position feedback signal meet the first preset condition in response to the in-position detection signal and the in-position feedback signal coinciding.

3. The tow hook controlling method according to claim 1 or 2, wherein the motor control signal comprises target rotation duration, the first rotation information comprises actual rotation duration of the drive motor assembly, and the tow hook controlling method further comprises:
determining that the first rotation information meets the second preset condition in response to the actual rotation duration reaching the target rotation duration.

4. The tow hook controlling method according to claims 1 or 2, wherein the motor control signal comprises a target rotation angle, the first rotation information comprises an actual rotation angle of the drive motor assembly, and the tow hook controlling method further comprises:
determining that the first rotation information meets the second preset condition in response to the actual rotation angle equaling the target rotation angle.

5. The tow hook controlling method according to any one of claims 1 to 4, wherein the target position detection signal and the position feedback signal are both pulse modulated signals, and the tow hook controlling method further comprises:
determining that the position feedback signal and the target position detection signal meet the third preset condition in response to the target position detection signal and the position feedback signal coinciding.

6. The tow hook controlling method according to any one of claims 1 to 5, after the determining that the tow hook has reached a target position, further comprising:
acquiring second rotation information, wherein the second rotation information is rotation information of the drive motor assembly after the stop control signal is sent; and
determining a drive parameter based on the second rotation information, wherein the drive parameter is a parameter for driving the drive motor assembly during next control of the tow hook.

7. The tow hook controlling method according to any one of claims 1 to 6, further comprising:
periodically sending the target position detection signal and periodically acquiring the position feedback signal; and
sending an alarm message in response to a count of instances where the position feedback signal and the target position detection signal do not meet the third preset condition reaching a preset number.

8. A tow hook control system, comprising a control unit, a drive motor assembly, a tow hook locking mechanism assembly, an acquisition unit, and a microprocessor unit; wherein
the control unit is configured to send an in-position detection signal upon receiving a tow hook control signal;
the microprocessor unit is configured to output an in-position feedback signal based on the in-position detection signal;
the control unit is further configured to output a motor control signal and a target position detection signal in response to the in-position feedback signal and the in-position detection signal meeting a first preset condition;
the drive motor assembly is configured to rotate based on the motor control signal, drive the tow hook locking mechanism assembly to rotate, with an unlocking disc in the tow hook locking mechanism assembly moving a preset distance in a first direction to unlock the tow hook, and drive the tow hook to rotate;
the acquisition unit is configured to acquire rotation information of the drive motor assembly and output first rotation information;
the control unit is further configured to send a stop control signal in response to the first rotation information meeting a second preset condition;
the drive motor assembly is further configured to stop rotating based on the stop control signal, with the unlocking disc moving the preset distance in a second direction to lock the tow hook, where the first direction and the second direction are opposite;
the microprocessor unit is further configured to output a position feedback signal based on the target position detection signal; and
the control unit is further configured to determine that the tow hook has reached a target position in response to the position feedback signal and the target position detection signal meeting a third preset condition; wherein the target position detection signal and the position feedback signal output by the microprocessor unit meet the third preset condition in response to the tow hook being locked.

9. The tow hook control system according to claim 8, wherein the microprocessor unit comprises a contact sensor and a first sensor, the first sensor being electrically connected to the contact sensor and the control unit, and the contact sensor being disposed near the tow hook locking mechanism assembly;
when the unlocking disc moves the preset distance in the first direction, the unlocking disc presses against the contact sensor, and when the unlocking disc presses against the contact sensor, the in-position feedback signal output by the first sensor and the in-position detection signal fails to meet the first preset condition, or, the position feedback signal output by the first sensor and the target position detection signal fails to meet the third preset condition; and
when the unlocking disc does not press against the contact sensor, the in-position feedback signal output by the first sensor and the in-position detection signal meet the first preset condition, or, the position feedback signal output by the first sensor and the target position detection signal meet the third preset condition.

10. The tow hook control system according to claim 9, wherein the contact sensor comprises a microswitch, when the unlocking disc presses against the contact sensor, the microswitch is in a normally open state, and when the unlocking disc does not press against the contact sensor, the microswitch is in a normally closed state.

11. The tow hook control system according to claim 10, wherein the microswitch is provided with a normally open terminal, a common terminal, and a normally closed terminal, and the normally open terminal, the common terminal, and the normally closed terminal of the microswitch are connected to three pins of the first sensor in one-to-one correspondence.

12. The tow hook control system according to any one of claims 8 to 11, wherein the control unit is further configured to acquire second rotation information through the acquisition unit and determine a drive parameter based on the second rotation information, the second rotation information being rotation information of the drive motor assembly after the stop control signal is sent by the control unit, and the drive parameter being configured to indicate a parameter for driving the drive motor assembly during next control of the tow hook.

13. The tow hook control system according to any one of claims 8 to 12, wherein a transmission mechanism of the drive motor assembly comprises a worm gear and a single-stage gear set.

14. The tow hook control system according to any one of claims 8 to 13, wherein the acquisition unit comprises a Hall sensor, and a motor shaft of the drive motor assembly is equipped with a multi-stage permanent magnet to form a potentiometer with a brush on a rotor.

15. A vehicle comprising a tow hook control system according to any one of claims 8 to 14.
